# EUROPEAN PATENT APPLICATION

(11) **EP 4 676 080 A1**
(43) Date of publication of application: **07.01.2026**
(21) Application number: 24185872.9
(22) Date of filing: 02.07.2024
(51) Int. Cl.: H04Q 11/00

(54) **OPTICAL DATA NETWORK FOR CONNECTING A PLURALITY OF DATA NETWORK NODES**

(71) Applicant: Astrape B.V., 5656 AE Eindhoven (NL)
(72) Inventor: Camilli, Marco, 2850 Boom (BE); Falk, Dragos, 307287 Mosnita Veche (RO); Patru, Claudiu-Vasile, 307220 Giroc (RO)
(74) Representative: van Dijk, Victor Emmanuel Stephanus

(57) **Abstract**

The invention relates to an optical data network (10-1) for connecting a plurality of data network nodes (N1-1, N2-1, N3-1, N4-1). The optical data network (10-1) comprises: i) the plurality of data network nodes (N1-1, N2-1, N3-1, N4-1), the data (99) comprising data packets (99p), wherein each data network node (N1-1, N2-1, N3-1, N4-1) is provided with a network interface (Nl); and ii) a data connection network (100-1) comprising at least one data switch (SW) and a plurality of optical connections (50) for allowing establishment of data links (DL1, DL2) between pairs of said plurality of data network nodes (N1-1, N2-1, N3-1, N4-1). At least one of the at least one data switch (SW) is a smart data switch (SSW) comprising at least one packet switch (PS, EPS) and at least one circuit switch (CS, OCS), At least two network interfaces are smart network interfaces (SN, SNC) comprising a data classifier (25) configured for classifying the data packets (99p) into at least two traffic classes including first traffic class (D1) and a second traffic class (D2) in accordance with a classification scheme. The smart data switch (SSW) and the network interfaces (SN, SNC) are configured to route the data packets (99p) of the first traffic class (D1) to the packet switch (PS, EPS) and to route the data packets (99p) of the second traffic class (D2) to the circuit switch (CS, OCS).

## Description

### FIELD OF THE INVENTION

The invention relates to an optical data network for connecting a plurality of data network nodes, the optical data network comprising:
i) the plurality of data network nodes configured for communicating data with each other, wherein the data is communicated using a communication protocol, the data comprising data packets in accordance with the communication protocol, wherein each data network node is provided with a network interface; and
ii) a data connection network comprising at least one data switch and a plurality of optical connections connecting the at least one data switch with the network interfaces of the plurality of data network nodes thereby forming the data connection network for allowing establishment of data links between pairs of said plurality of data network nodes. The invention also relates to a method of connecting a plurality of data network nodes via an optical data network.

### BACKGROUND OF THE INVENTION

Optical data networks typically connect together data centres, enterprises, service providers, and residential homes. These networks facilitate communication and the exchange of data between various devices and locations.

Optical data networks are high-speed communication networks that utilize optical fibres to transmit data at incredibly fast speeds, typically measured in gigabits or terabits per second. These networks are the backbone of modern telecommunications infrastructure and are essential for transmitting large amounts of data quickly and efficiently.

The state of the art in optical data networks is constantly evolving, with advancements being made in various areas such as optical components, transmission techniques, and network architectures. Some key developments in the field include the deployment of wavelength division multiplexing (WDM) technology, which allows multiple data streams to be transmitted over a single optical fibre by using different wavelengths of light. This significantly increases the capacity of the network and reduces the need for additional infrastructure.

Another important advancement is the use of coherent optical transmission, which enables higher data rates and longer transmission distances by using advanced signal processing techniques to mitigate signal degradation. This technology has enabled the development of ultra-high-speed networks capable of transmitting data at speeds exceeding 100 gigabits per second.

Additionally, software-defined networking (SDN) and network function virtualization (NFV) are being increasingly integrated into optical data networks to improve network efficiency and flexibility. These technologies allow network operators to dynamically allocate resources, optimize network performance, and quickly deploy new services.

Overall, the state of the art in optical data networks is focused on increasing capacity, improving efficiency, and enhancing network agility to meet the ever-growing demands of modern data-intensive applications and services.

Optical data networks of the kind mentioned in the opening paragraph are known as such.

Even though there have been many developments over the last years in the field of optical data networks, there is still a clear need to further develop these networks in terms of their efficiency and adaptability to varying demands as far as the ever increasing amount of network traffic is concerned.

### SUMMARY OF THE INVENTION

The invention has for its object to remedy or to reduce at least one of the drawbacks of the prior art, or at least provide a useful alternative to prior art, *particularly an optical data network for connecting nodes* of a *data centre with each other, but also data centres with each other.*

The object is achieved through features, which are specified in the description below and in the claims that follow.

The invention is defined by the independent patent claims. The dependent claims define advantageous embodiments of the invention.

In a first aspect the invention relates to an optical data network for connecting a plurality of data network nodes. The optical data network comprises: i) -the plurality of data network nodes configured for communicating data with each other, wherein the data is communicated using a communication protocol, the data comprising data packets in accordance with the communication protocol, wherein each data network node is provided with a network interface; and ii) a data connection network comprising at least one data switch and a plurality of optical connections connecting the at least one data switch with the network interfaces of the plurality of data network nodes thereby forming the data connection network for allowing establishment of data links between pairs of said plurality of data network nodes. The optical data network is characterized in that at least one of the at least one data switch is a smart data switch comprising at least one packet switch and at least one circuit switch, and in that at least the respective network interfaces connected with each smart data switch are respective smart network interfaces, each smart network interface comprising a data classifier configured for classifying the data packets into at least two traffic classes including first traffic class and a second traffic class in accordance with a classification scheme, wherein the first traffic class is destined to be sent to the packet switch and the second traffic class is destined to be sent to the circuit switch, and in that the smart data switch and the network interfaces are configured to route the data packets of the first traffic class to the packet switch and to route the data packets of the second traffic class to the circuit switch. As will be explained later in this specification the classification may be static or dynamic in that it is adjusted to the circumstances.

The effects of the features of the optical data network in accordance with the invention are as follows. First of all, the optical data network comprises at least one smart data switch, which comprises at least one circuit switch and at least one packet switch, each switch type having its own advantages and disadvantages. Second, each network interface connected with the at least one smart data switch comprises a data classifier, which is an important feature of the invention, because it cooperates with the smart data switch. The classifier classifies the data into at least two traffic classes including a first traffic class and a second traffic class, wherein the first traffic class is destined to be routed to the packet switch and the second traffic class is destined to be routed to the circuit switch. The smart data switch and the network interface card are configured to route each respective data class to its respective switch. The invention presents a data switch that integrates circuit switches (which may be an optical circuit switch) and packet switches (which may be an electronic packet switch, but could also be a special optical packet switch), which all may be orchestrated by a sophisticated internal control system. At its heart, the switch excels in crafting highly efficient networks adept at managing both 'dynamic traffic', which often involves small, frequent data packets-and 'static traffic', which often involves large, significant data transfers. However, in the optical data network of the invention the actual classification is carried out in the network interfaces, which are provided with extra features not known from the prior art, such as the data classifier. This architecture provides versatility and superior performance in a variety of network conditions. It is crucial to highlight that the embodiments of the smart data switch may use both optical and electronic components, achieving these results and presenting itself as a unified hybrid switch within the network.

To facilitate understanding of the invention one or more expressions are further defined hereinafter.

Wherever the wording "optical data network" is used, this must be interpreted as a data network that is mainly build up out of a plurality of data network nodes connected by switches and substantially optical data connections, such as optical fibre connections and optical waveguides. There may be local electrical connections as well, but it is the optical domain that is dominant.

Wherever the wording "data network node" is used, this must be interpreted as an entity connected to the data network, which either generates data to be communicated over the data network and/or receives such data from the data network. Examples of data network nodes are a server, a supercomputer, a switch (both smart and legacy) including a Top-of-Rack (TOR) or a leaf and spine switch.

Wherever the wording "data" is used, this must be interpreted as the information that is transmitted over the data network, such information typically being embodied in data packets.

Wherever the wording "communication protocol" is used, this must be interpreted as the protocol data is used to communicate data over the data network, such as the Transmission Control Protocol (TCP), Internet Protocol (IP), User Datagram Protocol (UDP), Internet Control Message Protocol (ICMP), Ethernet, and InfiniBand. It must be noted that data packets often have multiple layers, wherein each layer has its own communication protocol. For example, a TCP segment is embedded in an IP packet that is embedded in an Ethernet frame.

Wherever the wording "data packet" is used, this must be interpreted as a quantity of data that is packaged, which as a whole may be communicated over a data network in accordance with a predefined communication protocol or a set of predefined communication protocols. Typically, a data packet comprises a header and payload to be communicated, wherein the data itself may comprise another header in accordance with another communication protocol together with its payload. The header of a TCP segment comprises fields for: source port, destination port, sequence number, acknowledgement number, reserved functions, data offset, flags, window, checksum, urgent pointer, options, padding. The data or payload, being variable in size, is embedded by the header. The header of an IP packet comprises fields for: Version, IHL, Type-of-Service, total length, identification, flags, fragmentation offset, time-to-live, protocol, header checksum, source address, destination address, options (+padding). The data, being variable in size, follows the header. The header of a ICMP packet is typically 8-bytes and comprises fields for: type, code, checksum, rest of header. The data, being variable in size, follows the header.

Wherever the wording "network interface" is used, this must be interpreted as the part of the network node that is configured for allowing communication with the data network. It may be implemented in dedicated hardware (such as a PCIE-card to be inserted in a PCIE-slot or a full-custom piece of hardware), but could also be implemented in software running on a processor/controller, or even as a combination of both.

Wherever the wording "data connection network" is used, this must be interpreted as the part of the data network connecting the different network nodes together, including the optical connections, the data switches, and maybe some local electrical connections.

Wherever the wording "data switch" is used, this must be interpreted as the components in the data network that dynamically establishes data links between the network nodes that are communication or supposed to communicate with each other.

Whenever the wording "optical connection" is used, this must be interpreted as a connection over which optical signals are transmitted. Example of such optical connections are glass fibre (single mode fibre, multimode fibre, polarization maintaining fibre) and optical waveguides.

Wherever the wording "data link" is used, this must be interpreted as an established data connection between two network nodes over which data can be, has been or will be communicated.

Wherever the wording "smart data switch" is used, this must be interpreted as a data switch with extra built-in functionality, beyond the functionality of a conventional data switch, in line with the data switch presented in this specification.

Wherever the wording "data classifier" is used, this must be interpreted as a part of the network interface that is configured for classifying data packets in accordance with the current invention. The functionality of the data classifier goes beyond the conventional network interfaces that are known from the prior art. The data classifier by be implemented in hardware, in software or a combination of both.

Wherever the wording "traffic classes" is used, this must be interpreted as classes of data packets defined by their destination in the smart data switch. As the current specification will illustrate, there are many ways to classify the data packets to achieve the desired advantage of the current invention.

Wherever the wording "packet switch" is used, this must be interpreted as a data switch that is capable of analysing the data packet and establishing the data links based on the analysis of the data packet. An example of such packet switch is an electronic packet switch.

Wherever the wording "circuit switch" is used, this must be interpreted as a data switch that is not able of analysing the data packet, but establishes the data links under control of a controller that determines the destination of the data packet.

Wherever the wording "Quality-of-service" is used, this refers to part of a data packet, i.e. typically a byte in the header, indicating the data packet concerns a special, high-priority, class.

In an embodiment of the optical data network in accordance with the invention the classification scheme is based on a header of the data packets. The header of a data packet could be defined as to include all parts outside the payload of the data packet. Most of the header typically precedes the payload and some of it follows the payload. The current embodiment advantageously uses header information to decide upon where the data packet is to be sent, that is one of the least one circuit switch or one of the at least one packet switch. For example, certain headers are known to be representative for small more dynamic data packets (which may be referred to as mouse traffic), which then are good candidates for being sent to the packet switch. Other headers are known to be representative for larger more static data packets, which then are good candidates for being sent to the circuit switch. The detailed description will further elaborate on this embodiment.

In an embodiment of the optical data network in accordance with the invention the classification scheme is based on further parts of the data packets, such as a payload of the data packet. In the classification scheme it is also possible to use information of the payload of the data packet, particularly when the payload itself contains further header information preceding a further sub-payload. This is often the case when multiple communication protocols are used simultaneously, that is at different levels of the data packet. Using this information from the payload the classification scheme can be made more sophisticated. The detailed description will further elaborate on this embodiment.

The two embodiments presented above can be combined, that is the classification scheme can be based on the header and/or on the footer. But as far as the combination of these two is concerned, the following remark is to be made. For data packets that are to be sent to the packet switch, it is possible to base the classification purely on the payload. However, for data packets that are to be sent to the circuit switch, it may in certain embodiments necessary to look at the header in order to find out the destination of the packets, for example one needs to check the headers of the ethernet or InfiniBand header.

In an embodiment of the optical data network in accordance with the invention the classification scheme is based on at least one of the following classification criteria: a destination field of the data packets, a source field of the data packets, data congestion on a specific destination path, a type of the data packets, and a quality-of-service or priority field of the data packets. These classification criteria have shown to be very advantageous for basing the classification scheme on. Some of them are based on the information in the data packet and others are obtained from other places of the data network, such as the information about data congestion in a specific path. One way wherein congestion information becomes available to the network interface is that each data network node is actively telling the switch controller their load by creating capacity requests. The smart data switch may then use that congestion information to control the circuit switch(es) (TDMA) but also to set the data classifiers of the various network interfaces. The network interface does not really need to know the congestion level, but only what to do with with the data packets (in the data classifier).

In an embodiment of the optical data network in accordance with the invention the smart data switch further comprises a switch controller for controlling the at least one circuit switch and the at least one packet switch. The controller is particularly useful for controlling the circuit switch, which does not have the "intelligence" to read the data packets. The packet switch may also be controlled by the same controller, but then typically indirectly, that is via control ports which communicate via an internal control place. More information is presented in the detailed description.

In an embodiment of the optical data network in accordance with the invention the at least one packet switch comprises an electronic packet switch. At the time of filing this patent (application) the electronic packet switches were the most feasible and most common type of packet switches. However, the invention is not limited to electronic packet switches. Optical packet switches may become more feasible and a relevant alternative solution as packet switches.

In an embodiment of the optical data network in accordance with the invention the at least one circuit switch comprises an optical circuit switch. At the time of filing this patent (application) the optical circuit switches were the most feasible and most common type of circuit switches. However, the invention is not limited to optical circuit switches. Maybe not likely, but in certain applications electrical circuit switches may be a possible alternative to optical circuit switches.

In an embodiment of the optical data network in accordance with the invention each smart data switch comprises at least one electronic packet switch and three optical circuit switches. Increasing the number of optical circuit switches to three increases the throughput of the switch as data congestion may easily occur on the circuit switch. Having three optical circuit switches at in this embodiment has shown to provide enough flexibility in many cases. In general, increasing the number of circuit switches and packet switches increases both reliability and bandwidth. In case one switch breaks down, another one can be used. If more bandwidth is needed, switches can work on difference frequencies between the same sender and receiver. The advantage of having three circuit switches and one packet switch is that this nicely fits the current CWDM standard that uses four different wavelengths in the O-band to transmit data. Since this standard uses four different wavelengths the decision for one electronic packet switch and three optical circuit switches reduces the number of required transceivers at the smart data switch as much as possible.

In an embodiment of the optical data network in accordance with the invention each smart data switch comprises at least two electronic packet switches. This embodiment is advantageous in certain scenarios. The capacity of the packet switches is conveniently increased, which is advantageous when there is, for instance, a lot of dynamic (i.e. "mouse") traffic to be handled.

In a second aspect the invention relates to the smart data switch of the optical data network according to the first aspect of the invention. In the commercialization of the current invention the applicant will sell the major components of the optical data network of the invention. This also concerns the smart data switch, which in combination with the adaptation of the network interface provides the earlier benefits of the current invention.

In a third aspect the invention relates to the network interface of the optical data network according to the first aspect of the invention. In the commercialization of the current invention the applicant will sell the major components of the optical data network of the invention. This also concerns the network interface, which may be sold as a piece of hardware or as a piece of software/firmware to be installed on the optical data network nodes (for example a ToR). This network interface having the integrated data packet classification functionality, in combination with the adaptation of the network interface provides the earlier benefits of the current invention.

In one embodiment of network interface it is embodied in a network interface card. The network interface card is a convenient embodiment that allows for upgrading existing data networks by just replacing the existing network interface card with a new one.

In alternative embodiments the network interface is embodiment in software running on a processor or a piece of firmware. Upgrading existing data networks then involves upload-ing new software or firmware .

In a fourth aspect the invention relates to a method of connecting a plurality of data network nodes via an optical data network, the method comprising:
- providing an optical data network comprising:
   i) the plurality of data network nodes configured for communicating data with each other, wherein the data is communicated using a communication protocol, the data comprising data packets in accordance with the communication protocol, wherein each data network node is provided with a network interface; and
   ii) a data connection network comprising at least one packet switch and at least one circuit switch, the data connection network further comprising a plurality of optical connections connecting the at least one data switch with the network interfaces of the plurality of data network nodes thereby forming the data connection network for allowing establishment of data links between pairs of said plurality of data network nodes;
- classifying the data packets into at least two traffic classes including first traffic class and a second traffic class in accordance with a classification scheme, wherein the first traffic class is destined to be sent to a packet switch and the second traffic class is destined to be sent to a circuit switch, and
- routing the data packets of the first traffic class to the packet switch and to route the data packets of the second traffic class to the circuit switch.

The method of the invention conveniently has the same advantages and effect of the optical data network of the invention. This method conveniently covers the embodiments that are substantially embodiment in software or firmware on existing platforms or hardware.

In an embodiment of the method according to the invention, the classification scheme is based on a header of the data packets. This embodiment has the same advantages and effects as the corresponding embodiment of the optical data network of the current invention.

In an embodiment of the method according to the invention, the classification scheme is based on further parts of the data packets, such as a payload of the data packet. This embodiment has the same advantages and effects as the corresponding embodiment of the optical data network of the current invention.

In an embodiment of the method according to the invention, the classification scheme is based on at least one of the following classification criteria: a destination field of the data packets, a source field of the data packets, data congestion on a specific destination path, a type of the data packets, and a quality-of-service or priority field of the data packets. This embodiment has the same advantages and effects as the corresponding embodiment of the optical data network of the current invention.

### BRIEF INTRODUCTION OF THE DRAWINGS

In the following is described example of preferred embodiments illustrated in the accompanying drawings, wherein:
- Fig. 1: shows a general structure of a known optical data network;
- Fig. 2: shows a general structure of another known data network;
- Fig. 3: shows a general structure of an optical data network in accordance with an embodiment of the invention;
- Fig. 4: shows further aspects of the optical data network of Fig. 3;
- Fig. 5: shows further aspects of an optical data network in accordance with another embodiment of the invention;
- Fig. 6: shows an implementation of the smart data switch of Fig. 5;
- Fig. 7: shows an implementation of a network interface card that may be used in the TOR's of Fig. 5;
- Fig. 8: shows further aspects of the optical data network of Fig. 4;
- Fig. 9: shows an implementation of the network interface in accordance with a further embodiment of the invention;
- Fig. 10: shows further implementation aspects of the smart data switch of Fig. 5 in accordance with a further embodiment of the invention;
- Fig. 11: shows some control aspects of the optical data network in accordance with embodiments of the invention;
- Fig. 12: illustrates communication aspects of the optical data network when data packets are being sent to the packet switch;
- Fig. 13: illustrates communication aspects of the optical data network when data packets are being sent to one of the circuit switches;
- Fig. 14: illustrates how data packets can have multiple layers each having different communication protocols;
- Fig. 15: illustrates how an ethernet data packet is typically built up; and
- Fig. 16: illustrates more generally how a data packet is typically built up.

### DETAILED DESCRIPTION OF THE EMBODIMENTS

Various illustrative embodiments of the present subject matter are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present subject matter will now be described with reference to the attached figures. Various systems, structures and devices are schematically depicted in the drawings for purposes of explanation only and to not obscure the present disclosure with details that are well known to those skilled in the art. Nevertheless, the attached drawings are included to describe and explain illustrative examples of the present disclosure. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The invention presents an optical data work having a network switch that integrates (optical) circuit switches and (electronic) packet witches, all controlled by a sophisticated internal control system. At its heart, the switch excels in crafting highly efficient networks adept at managing all types of traffic, including 'mouse traffic', which involves small, frequent data packets to different destinations, and 'elephant traffic', which is characterized by large, significant data transfers to substantially the same destination. This architecture provides versatility and superior performance in a variety of network conditions. It can be highlighted that this single network switch uses both circuit and packet switches and thereby both optical and electronic components. So, these results are achieved by presenting a unified hybrid switch within the optical data network.

The conception of this invention was driven by the need to enhance the switching speed of optical circuit switches to increase its ability to efficiently handle smaller data packets without negatively impacting carrier usage. This challenge becomes more pronounced with the increasing demand for high-speed, efficient data transmission in various network applications. The slower switching speeds of conventional optical switches often lead to bottlenecks, particularly when managing smaller, more frequent data packets. Furthermore, an (optical) circuit switch has no possibility to check the packet and thus switch each individual packet independently. Recognizing this gap, the idea for a combined optical and electronic switch inside a single network switch, controlled by an advanced internal control plane, emerged. This novel approach aims to significantly reduce the switching latency inherent in optical circuit switches while ensuring the efficient delivery of both large and small data flows. This innovation is not just a step forward in addressing the current limitations of optical switches but is also a proactive measure to adapt to the evolving needs of network communication technologies.

In the contemporary arena of network technology, the prevalent use of powerful electronic switches is aimed at achieving low latency and high bandwidth in data transmissions. While these switches have shown considerable effectiveness, their performance is increasingly curtailed by the rising demands for computational resources and energy. This issue is becoming more acute as data requirements in network communications continue to expand.

Additionally, circuit switches like the Optical Circuit Switch (OCS) employed in Google's Jupiter network, have surfaced as viable alternatives. These switches excel at establishing semi-static direct links, offering a novel paradigm for data handling. Nevertheless, their use has generally been confined to scenarios requiring stable, long-duration connections. This limitation stems from their inherently static design, which does not suit the dynamic and varied conditions of network traffic, particularly when handling the frequent small data packets typical for mouse traffic.

Moreover, while various hybrid opto-electronic datacentre networks have been explored, and datacentres like those utilizing Google's OCS technology employ hybrid topologies, none have yet integrated such a solution directly into the core of a network switch to allow for superior granularity.

The Helios solution as published by the University of San Diego in California utilizes a hybrid combination of electronic and optical switches to improve network efficiency. More details on the Helios solution will be presented later in this specification.

The background of the invention and the embodiments of the invention will be discussed with reference to the figures hereinafter.

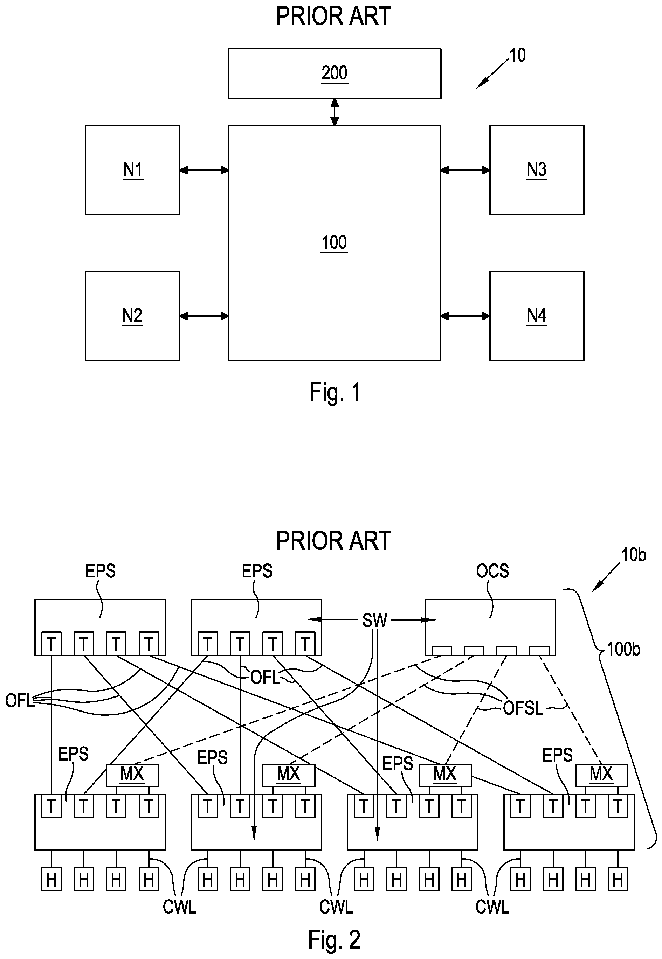

Fig. 1 shows a general structure of a known optical data network 10. Such optical data network 10 generally comprises of a plurality of so-called data network nodes N1..N4 connected together via a data connection network 100, as illustrated. The data connection network 100 typically comprises switches (not shown) and connections (not shown) in accordance with a predefined architecture (not shown). In the current example there are four data network nodes N1..N4 shown, but this may be any other number. The data network nodes N1..N4 are to communicate with each other via the optical data network 100, which is controlled by a topology manager 200. The topology manager 200 is typically capable of reconfiguring the architecture of the data connection network 100 in terms of its connections or the way it operates the switches.

Fig. 2 shows a general structure of another known data network 10b. It illustrates the earlier mentioned Helios architecture. The figures shows a plurality of hosts H, which may be referred to as nodes in the current invention. The hosts H are connected with each other by means of the data connection network 100b having the Helios architecture 100b. The data connection network 100b comprises a plurality of switches SW comprising multiple electronic packet switches EPS and one optical circuit switch OCS as illustrated. The 16 illustrated hosts H (but this can be any other number) are grouped in groups of 4 hosts H, each group being assigned to a respective 4-port electronic packet switch EPS. The connections between these ports and the respective hosts H are typically a 10Gbit Copper wire link CWL. The electronic packet switches EPS each have transceivers T on their communication ports for allowing coupling of optical fibre links OFL. The first layer of electronic packet switches EPS (four in total) have two transceivers that are coupled with 10Gbit optical fibre links OFL (as an example embodiment), which links are routed to two respective packet switches EPS in a second layer, as illustrated. In this way each of the four electronic packet switches EPS in the first layer are enabled to communicate with each other via the electronic packet switches. The other two transceivers of the first layer of electronic packet switches EPS are connected to a single optical circuit switch OCS via a multiplexer MX, as illustrated. The optical connections to the optical circuit switch are typically 20Gbit optical fibre superlinks OFSL. The reason for adding the multiplexers MX is to reduce the number of optical circuit switches OCS, which reduces the cost.

To minimize the number of electronic switches EPS and enhance network efficiency, Helios replaces some of the electronic packet switches EPS in the network with optical circuit switches OCS. In the Helios concept a network topology manager analyses traffic and modifies the OCS topology accordingly. For instance, suppose the first and last EPS in the first layer (the lower row) are transmitting a significant amount of data. In a typical scenario, before proper configuration of the optical circuit switch OCS, the data would be routed through an intermediate electronic packet switch EPS in the second layer (the upper row), causing inefficiencies due to conversion and congestion, as the intermediate electronic packet switch EPS is merely forwarding packets between two endpoints. When the topology manager identifies such a situation, the optical circuit switch OCS is configured to establish a direct link between the two electronic packet switches EPS, eliminating the need for extra conversion (optical/electrical), because the optical circuit switch OCS does not have transceivers on its input, i.e., it operates 100% in the optical domain. Transceivers are expensive components, which renders the Helios concept a cost-saving concept.

This solution employs standard network interface cards (NICs) in the electronic packet switches EPS and requires considerable time to respond, typically around 200-300ms, which is in addition to the time needed to create new links through the optical circuit switch OCS and the network interface cards.

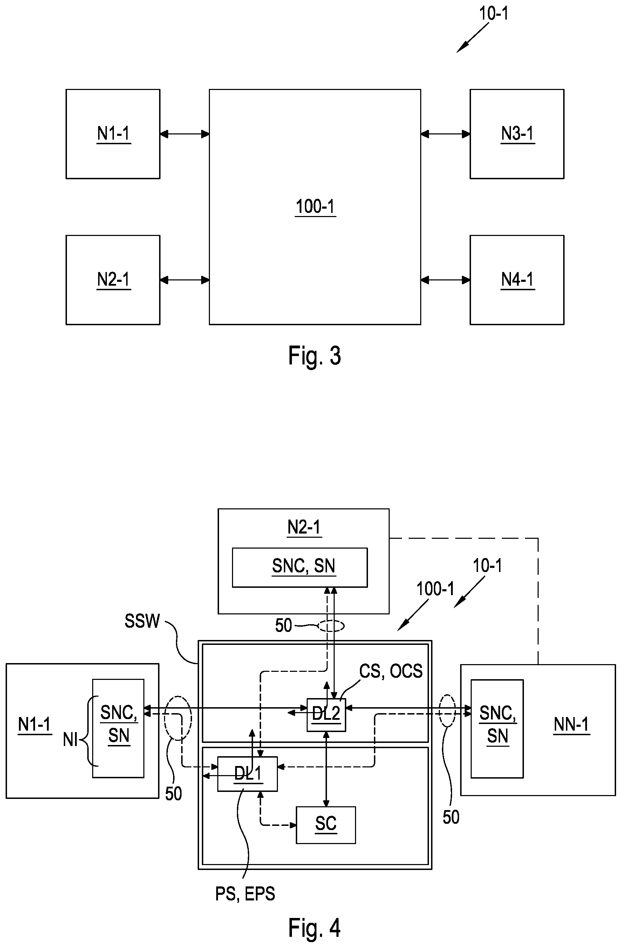

Fig. 3 shows a general structure of an optical data network 10-1 in accordance with an embodiment of the invention. This optical data network 10-1 generally comprises of a plurality of so-called data network nodes N1..N4 connected together via a data connection network 100-1, as illustrated. The data connection network 100-1 comprises at least one switch (not shown) and connections (not shown) in accordance with a predefined architecture (not shown). In the current example the optical data network 10-1 comprises four data network nodes, which are also referred to as smart nodes N1-1, N2-1, N3-1, N4-1 shown, but this may be any other number of nodes. The smart nodes N1-1, N2-1, N3-1, N4-1 are to communicate with each other via the optical data network 100-1. A striking difference between Fig. 3 and Fig. 1 is that the invention as presented in Fig. 3 does not show a topology manager 200 as Fig. 1 does. This is to illustrate that part of its functionality is no longer required, because of the self-adapting or self-steering (autonomous) switching architecture of the data connection network 100-1. Of course, the topology manager will most likely be there, yet to carry out other tasks, such as controlling and changing settings of each switch in the optical data network 10-1, recovering the optical data network 10-1 after a switch breakdown causing certain paths not being available anymore. Another difference are the smart nodes N1-1, N2-1, N3-1, N4-1, which comprise additional functionality as compared to normal nodes. This additional functionality resides in what is typically referred to as the network interface, which may be network interface cards (NICs). At this stage it briefly mentioned that the additional functionality means that data packets are analysed in the network interface in order to make different streams of data, each stream being routed to a selective one of the circuit switch (not shown) or the packet switch (not shown).

Fig. 4 shows further aspects of the optical data network 100-1 of Fig. 3. This figure serves to illustrate the main inventive gist of the invention. Many variations to the inventive gist are possible. In this embodiment the optical data network 100-1 comprises a switch being a smart data switch SSW, which will be elaborated upon later. The smart data switch SSW comprises a circuit switch CS, which may be an optical circuit switch OCS in certain embodiments. The smart data switch SSW further comprises a packet switch PS, which may be an electronic packet switch EPS in certain embodiments.

A first important remark is that the smart data switch SSW of the current invention internally comprises both at least one packet switch PS and at least one circuit switch CS, while on its ports it communicates via optical ports only. The packet switch PS, EPS is controlled by a switch controller SC as illustrated. But the switch controller SC also controls the circuit switch CS, OCS to a lesser extent. The smart data switch SSW is connected with the respective data network nodes N1-1, N2-1, NN-1. The smart data switch SSW is typically connected with respective network interfaces NI of the data network nodes via optical connections 50 as illustrated. In the current invention these network interfaces NI, which may be network interfaces cards, are provided with additional functionality, as earlier mentioned, rendering the network interfaces NI to be smart network interfaces SN (smart network interface cards SNC). More about this additional functionality is discussed later. The switch controller SC cannot control directly the traffic sent through the optical circuit switch OCS, which is done by the smart network interface NI, instead, based on the parameters given by the switch controller SC. The electronic packet switch EPS may also be used to communicate with the network interface NI, which is not possible with the optical circuit switch OCS because the switch controller SC is not connected to a link of optical circuit switch OCS.

Fig. 4 clearly illustrates that both the packet switch PS and the circuit switch CS are coupled with all nodes N1-1, N2-1, NN-1. Here there are three data network nodes N1-1, N2-1, NN-1 drawn, but it may be any number N larger than or equal to three. In Fig. 4 also a first data link DL1 between the first data network node N1-1 and the second data network node N2-1 is illustrated by an arrow through the packet switch PS, EPS, and a second data link DL2 between the same first data network node N1-1 and the second data network node N2-1 is illustrated by a further arrow through the circuit switch CS, OCS.

Fig. 4 shows the main components of the optical data network 10-1 of the current invention. It must be noted that both links (illustrated by bidirectional arrows) originating from each smart network interface SN, SNC may originate from the same transceiver (not shown) in the network interface SN, SNC. These transceivers may utilize distinct lines for each link and may be a QSFP or OSFP for example. The architecture of Fig. 4 is scalable to multiple lines managed by various optical and electronic switches as will be illustrated later in this specification.

As Fig. 4 shows, the invention encapsulates a dual-component framework within its network architecture: the smart network interface SN, SNC and the smart network switch SSW. The smart network interface SN, SNC excels in transmuting data between electrical and optical signals within standard network constructs such as servers and ToR configurations. Following suit, the smart network switch SSW is pivotal, championing efficient optical data routing across Nodes and reducing reliance on high-speed transceiver modules like quad small form factor pluggable (QSFP) and octal small form factor pluggables (OSFP).

The design of the current invention is in lockstep with industry standards, including Ethernet and InfiniBand, which underpin compatibility and integration with heterogeneous solutions. Notably, this approach affords the benefit of seamlessly merging with existing infrastructures without necessitating a wholesale transformation of the data centre network. This flexibility fosters the unobtrusive integration of elements of the invention into current systems.

The current state of network technology reveals clear advantages and limitations within the different types of switches used. Electronic switches are capable of dynamically managing data but require two optical transceivers per network port and substantial onboard resources for effective packet switching, which substantially compromises their power efficiency. In contrast, optical switches like Google's Optical Circuit Switching (OCS) systems need only one optical transceiver per link, providing better power efficiency but lacking in flexibility.

This stark contrast underscores the urgent need for an innovative solution that can bridge these technological divides, achieving a balance of efficiency, power conservation, and adaptability in network traffic management. It is this need the current invention aims to satisfy.

The primary issue with existing network technologies stems from their intrinsic constraints when managing diverse types of network traffic, such as 'mouse flow' (small, frequent data packets to multiple destinations) and 'elephant flow' (large, bulky data transfers to a limited number of destinations).

Electronic switches excel at handling mouse flows due to their quick processing of numerous small packets. However, they falter with elephant flows where the massive data transfer demands substantial resources and bandwidth, leading to congestion and inefficiencies. This limitation grows increasingly critical as the scale and size of data transfers expand in contemporary network environments.

Photonic switches, exemplified by those used in OCS systems, efficiently manage direct elephant traffic, swiftly moving large volumes of data ideally suited for substantial data transfer applications. Yet, their design, which favours stable and prolonged connections, renders them less capable and flexible in managing the frequent small packets typical of mouse traffic. Consequently, the network technology landscape presents a dichotomy: electronic switches efficiently manage mouse traffic but struggle with elephant flows, whereas optical switches excel with elephant traffic but falter with mouse traffic. This capability mismatch underscores a significant gap in network technology, where a pressing need exists for a solution that can proficiently manage both traffic types without the inherent drawbacks of either electronic or optical switches. The current invention provides such solution.

In the previous discussion of the Helios solution presented by the University of San Diego's in 2010, noting its significant performance differences compared to the approach of the current invention. Their system integrates both EPS (Electronic Packet Switches) and OCS (Optical Circuit Switches). That is as far as the comparison with the current invention goes. A key distinction is seen in how the control systems and Network Interface Cards

(NICs) interact with the switch. In the Helios solution, the network interfaces cards (NICs) are standard with no queuing or capacity requests. Traffic that cannot be handled by the optical switch (when the link is not available) is redirected to the electronic packet switch (EPS). The topology manager monitors traffic flow and establishes circuit switch links when it detects significant elephant traffic, yet this process is not conducted in real time. The Helios documentation indicates a reaction/switching delay of approximately 200ms, to which an additional 500ms to 1.5s must be added-the time required for a standard NIC to reestablish the link. Thus, Helios partially aligns with solutions like Google's OCS, which are suited for semi-persistent links. In contrast, the current invention operates using what the inventors refer to as "Smart NICS", with capacity requests managed by the switch controller in almost real-time, swiftly creating or dissolving links within microseconds, significantly enhancing the system's dynamism and responsiveness compared to both Helios and Google solution. The impact of the current invention is therefore not to be underestimated as it opens up a whole new era of optical data network architectures.

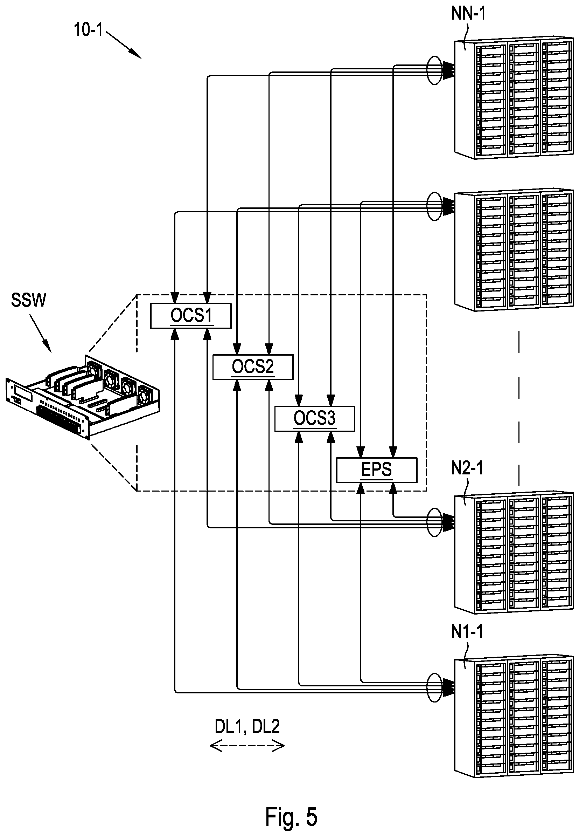

Fig. 5 shows further aspects of an optical data network 10-1 in accordance with another embodiment of the invention. The respective network nodes N1-1, N2-1, NN-1 in Fig. 5 are top-of-racks (TOR's) of server racks or servers, in this embodiment. In this embodiment the smart data switch SSW comprises three optical circuit switches OCS1, OCS2, OCS3 and one electronic packet switch EPS as illustrated. The heart of the optical data network 10-1 of the invention lies in the fast switching circuit switch (preferably a fully-optical switch), which establishes itself as the cornerstone for high-velocity data transit routes. This device can be configured to operate either as a broadband or a selective wavelength switch, deftly catering to the diverse demands of elephant traffic. Crafted for the expeditious and efficient relay of large data sets, the optical switch enables quick data transfers, sidestepping the typical bottlenecks inherent to electronic switches.

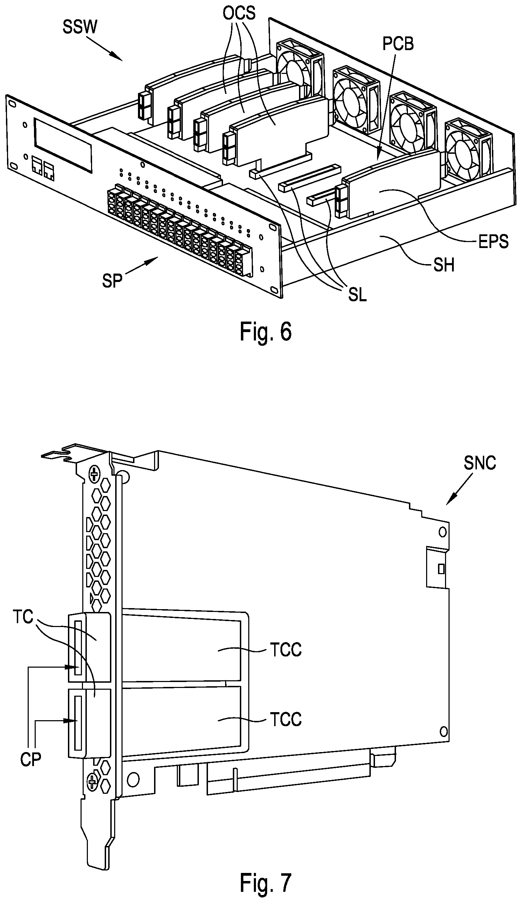

Fig. 5 can be generalized to multiple lines handled by different optical switches and electronic switches as shown in Fig. 6. Fig. 6 shows an implementation of the smart data switch of Fig. 5 having a smart switch housing SH comprising a printed-circuit board PCB with a plurality of slots SL for receiving respective data switch modules (OCS, EPS). In this embodiment four optical circuit switches OCS plugged into their respective slot SL and one electronic packet switch EPS. Furthermore, there are some empty slots as well. As illustrated in this figure the smart data switch SSW is highly modular, allowing the use of different switching modules-both electrical and optical-enhancing the system's flexibility and scalability. Fig. 6 also shows a plurality of optical switch ports SP at a front side of the smart switch housing SH.

Fig. 7 shows an implementation of a network interface card SNC that may be used in the TOR's of Fig. 5. This embodiment of the network interface card SNC comprises two transceiver cages TCC, each cage having a transceiver module TC (QFSP or OSFP) for allowing communication with the optical data network 10-1. The reason for the network interface card SNC having two cages is to allow the connection with two smart data switches SSW, which is important for enabling large data network designs. Each transceiver module TC has a plurality of communication ports CP to which multiple optical fibres (not shown) may be coupled. The additional functionality of the network interface card SNC may be conveniently integrated on the printed-circuit board (not shown) of the network interface card SNC, in software (firmware), in hardware (FPGA, ASIC, etc) or a combination of both.

As mentioned before, the architecture of the current invention at the heart is bifurcated into two primary components: the smart network interface (SN, SNC), which may be in the form of an accelerator card such as a network interface card (NIC), and the smart switch (SSW). For brevity, the smart network interface will now be referred to as Smart NIC. A Smart NIC, broadly speaking, is a Network Interface Card augmented with sophisticated functionalities that go beyond the standard NIC functionality and specifications. It may be integrated as an FPGA core, but also as an ASIC, elevating it to what is commonly termed an 'accelerator card.' These cards are lauded for their versatility and are traditionally utilized to offload a segment of processing and network management duties from the host machine to the NIC, thereby enhancing the efficiency of these operations and liberating host resources for additional tasks. It is important to recognize that 'Smart NIC' is a term of convenience that encompasses NICs with capabilities that surpass the current standard.

It is mentioned at this stage that, in the current invention, the packet switching role is effectively relocated from the conventional electronic switch to the Smart NIC.

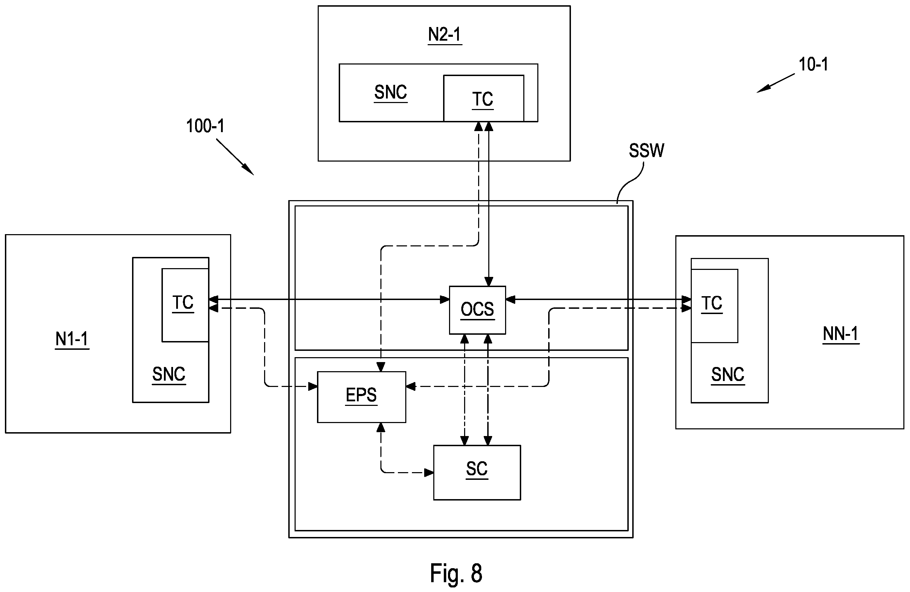

Fig. 8 shows further aspects of the optical data network 10-1 of Fig. 4, particularly relates to the switch controller SC. The switch controller SC with dual functionality is the operational epicentre, directing the internal control plane. This dual-purpose controller governs the electronic path as an electronic switch, adept at managing the dynamic and frequent small data packets of mouse traffic, while concurrently ensuring a smooth integration and transition between the optical switch and its electronic counterpart. This versatility guarantees an effective data throughput, regardless of the traffic type.

At the network nodes N1-1, N2-1, NN-1, be servers, ToRs, or other apparatuses. the smart network interface cards SNC are key. These cards SNC interface with both the optical and electronic paths. Through the utilization of control messages configuring the data classifiers which discern the traffic, the smart network interface cards SNC discern the most optimal path for packet delivery, channeling data via the optical or electronic switch, predicated on packet size and priority. This intelligent routing takes place at the NIC level, dictated by the configurations from the switch controller SC, elevating the network's efficiency and adaptability.

In unison, invention manages of both mouse and elephant traffic, surmounting the shortcomings of extant network technologies. The amalgamation of the Fast Switching Optical Switch's prowess in high-volume data transmission, the Switch Controller's skill in small packet oversight, and the Smart NICs' adeptness in dynamic routing yields an architecture of superior efficiency and responsiveness to the varied exigencies of network traffic. More information on how the different traffic classes are determined is provided later in this specification.

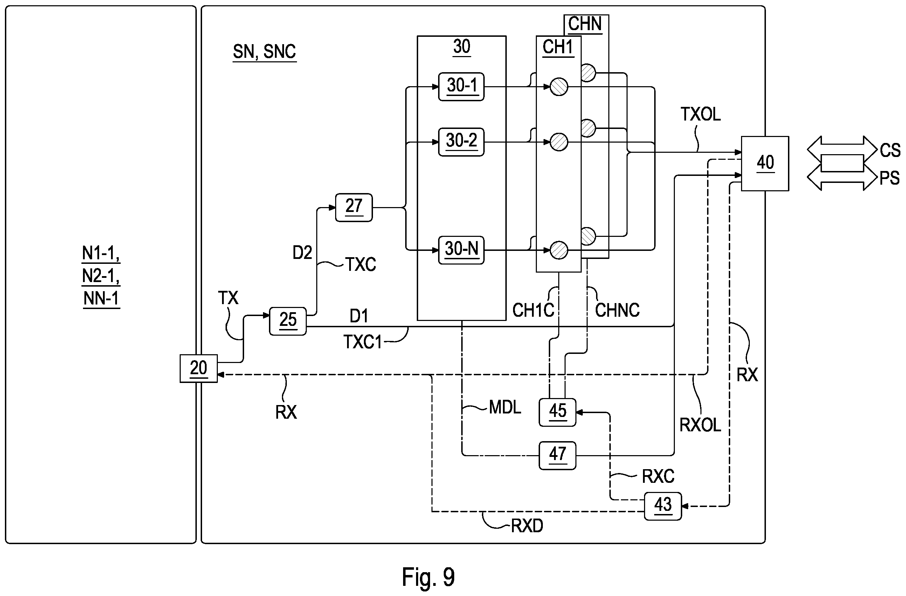

Fig. 9 shows an implementation of the network interface SN, SNC in accordance with a further embodiment of the invention. The current invention enriches the functionality of the network interface SN, SCN by creating two or more distinct data paths by classifying incoming data in at least two traffic classes. These data paths are managed independently, each channeling data to its corresponding transceiver line, and subsequently switch type, which is a packet switch or a circuit switch.

Fig. 9 illustrates the novel additions to a standard NIC, specifically excluding the interfaces that connect to both the host and the transceiver, as they are not changed by the current invention. The embodiment of Fig. 9 is designed for cooperating with a smart data switch SSW having three (optical) circuit switches (not shown) and one (electrical) packet switch (not shown). It must be noted that this figure just presents one possible implementation and that many variations are possible.

In Fig. 9, data packets for transmission TX are generated by the node N1-1, N2-1, NN-1 or host at the left side of the figure and transferred via a host/node interface 20 to a data classifier 25 as illustrated. This module or component is key to the current invention as will be elaborated upon later.

The host/node interface 20 acts as a gateway for data packet exchange with servers, switches, or other devices. The ubiquitous PCIe interface is typically employed in current applications, though alternatives like USB or PCI are also viable within the scope of the current invention. Thus, the host interface 20 both transmits data packets over a transmission data link TX and receives data packets over a reception data link RX from the other servers, switches or other devices.

The packet type classifier 25 distinguishes the data packets on the transmission data link TX by for example scrutinizing their headers, organizing them based on the projected data flow size and their priority or Quality of Service class. Large data stream packets are routed to (optical) circuit switches OCS, while a diverse array of packets are sent to the (electronic) packet switch EPS. The configuration of the data classifier 25 may be externally driven (via a topology manager or a human operator) or autonomously governed by a control plane. A control plane is responsible for maintaining tables and information needed to determine the correct path for data to travel through the data network. An example provided, albeit rudimentary and not fully efficient, demonstrates functionality by directing packets based solely on type, whereas an improved mechanism would also consider other parts of the data packet and adapt to fluctuating traffic conditions. More on the classification scheme will be provided later in this specification.

In an embodiment the following classification scheme may be implemented:
1. Data traffic having data packets according to the internet control message protocol (ICMP) is always of a more heterogeneous type (mouse traffic), and such data packets are classified as a first traffic class D1 that is destined for the (electronic) packet switch EPS and sent over the first traffic class link TXC1.
2. Data traffic having data packet according to the transmission control protocol (TCP) and the user datagram protocol (UDP) is most often of a more static type (elephant traffic), and such data packets are classified as a second traffic class D2 that is destined for the (optical) circuit switches OCS and sent over the second traffic class link TXC2.

While the classification scheme presented above may not be optimal, it has still proven to be quite effective in many situations, i.e. the general performance of the optical data network is significantly increased.

From the data classifier 25 the data packets of the first traffic class D1 are sent directly to an EPS line of the high-speed transceiver 40 via the first traffic class link TXC1 as illustrated. Please note that the transceiver 40 has multiple lines (four in case of QSFP or even eight in case of an OSFP. The remainder of the "intelligence" for processing these data packets is carried out in the packet switch EPS in the smart data switch SSW. More details are provided later in this specification.

From the data classifier 25 the data packets of the second traffic class D1 are sent to a packet destination classifier 27 via the second traffic class link TXC2 as illustrated. The packet destination classifier 27 allocates data packets to specific queues 30-1, 30-2, 30-N in the queue module 30 as illustrated. Allocation of the data packets is done by analysing their destination MAC addresses with numerous MAC addresses potentially mapping to a single destination port on the smart data switch SSW. The packet destination classifier 27 may be integrated with the packet type classifier 25 or kept as a separate function. When there is only one queue the destination type classifier 25 is no longer necessary. At least one queue is always necessary because of the necessity of a semaphore CH1, CHN to control the timing of transmission of the data packets over the (optical) circuit switch OCS. In the destination queues 30-1, 30-2, 30-N data packets are buffered in preparation for their transmission.

Each channel control semaphore CH1, CHN is connected to all outputs of the queues 30-1, 30-2, 30-N, as illustrated, and operate as logic gates determining the queue's readiness to be cleared (emptied by transmission). This is similar to a traffic light. The pattern having dashing from bottom right to top left indicates "green" light, i.e., data can pass through, and the pattern having dashing from bottom left to top right indicates "red" light, i.e., data is stopped at the gate. The transceiver 40 may be linked to multiple lines via the transmission data packet optical link TXOL as illustrated, facilitating various channels. Data packets reside in their queues tied to their designated path and transmission through the optical queue is contingent on the corresponding optical link's activity. For example, data packets aimed at 'destination 2' await an active optical path from this smart network interface SN, SNC to 'destination 2' before dispatch when the relevant semaphore 30-1, 30-2, 30-N is engaged.

The transceiver 40 entails the requisites of the chosen standard (such as QSFP) and includes the electrical-to-optical conversion elements, exemplified by a 400G LR4 QSFP.

Data packets are also coming back to the NIC. The data packets coming from the (optical) circuit switch CS are directly sent to the host/node interface 20 via the reception data packet optical link RXOL, as illustrated. Data packets coming from the (electrical) packet switch PS are sent to a RX type classified 43 via a reception data link RX as illustrated. The RX type classifier 43 differentiates between control packets and data packets. The data packets are sent to the host/node interface 20 via a reception data packet link RXD. The control packets are sent to an optical link controller module 45 via a reception control packet link RXC as illustrated. The optical link controller module 45 controls channel control semaphore management, such as timing for queue clearance across various channels. Each channel control semaphore CH1, CHN is controlled by signals on respective control channel links CH1C, CHNC, as illustrated.

Finally, there is a capacity request module 47 which monitors the queues 30-1, 30-2, 30-N via a monitoring data link MDL as illustrated. The capacity request module 47 solicits the initiation of a new optical link based on on queue capacity and then petitions, via the transceiver and the optical data work, a link duration sufficient for the queued packets' transmission. More evolved systems may pre-emptively determine the data volume and predict the necessary delay for link allocation.

As elucidated, the invention is anchored by two principal components: the smart network interface and the smart data switch. The NIC's awareness of slot sizes and frame structures enables it to approximate the delay for securing an optical link-typically averaging one frame's duration and at most two. It is pertinent to acknowledge the possibility of diverse implementations, which is also known in schooling circles as DTDM "Dynamic Time Division Multiplexing".

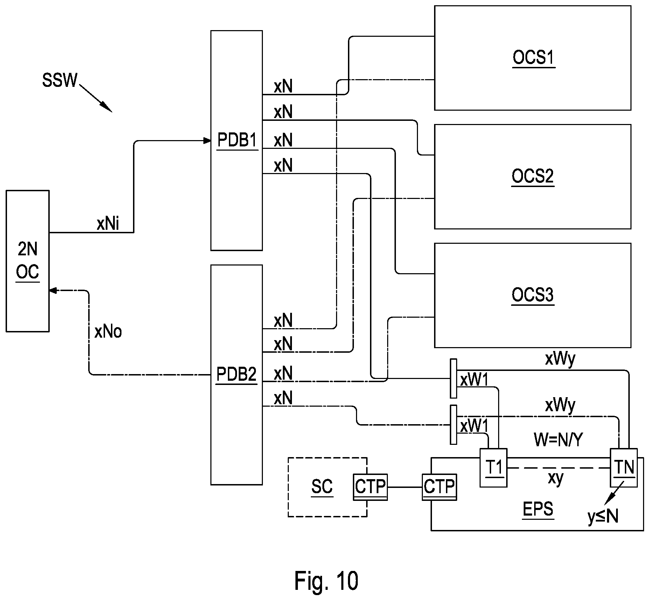

Fig. 10 shows further implementation aspects of the smart data switch SSW of Fig. 5 in accordance with a further embodiment of the invention. The smart data switch SSW is designed to harness the strengths of both optical and electronic switching to heighten efficiency and diminish power consumption.

Fig. 10 lays out a generic smart data switch SSW, illustrating the integral components that form its structure. On the left of the figure, it starts with the external ports OC, which are the fibre connectors comprises N inputs xNi and N outputs xNo. This may vary depending on the chosen technology. For single fibres utilizing Wavelength Division Multiplexing (WDM), the typical connector is the dual LC connector, which employs separate fibres for transmission (TX) and reception (RX). For simplicity in the diagram, TX fibres are depicted heading to the right and RX fibres to the left, with the notation 'xN' signifying paths for N independent fibres.

Following the TX path, we encounter a first optical distribution block PDB1, the initial routing station that separates various input wavelengths, channeling them to distinct switches (i.e., it acts as a demultiplexer). This versatile component can be implemented using different technologies and is also capable of recombining signals when needed. In a basic setup, an Arrayed Waveguide Grating (AWG) might be used to filter and demultiplex wavelengths-in the diagram's case, four. The number of wavelengths handled correlates with the transceiver type utilized.

Exiting the first optical distribution block PDB1 are 4xN fibres corresponding to the number of utilized wavelengths, which then connect to their respective optical circuit switch OCS. For an optical circuit switch, each input fibre can be real-time linked to one or several output fibres, wherein various technologies (MEMS, InP, SiPh) are possible. Therefore, the current invention is independent from specific technological constraints. The output fibres proceed to a second optical distribution block PDB2 as illustrated, which recombines the wavelengths and connects the composite fibre back to the RX side of the external ports xNo. A simple combiner may be used to implement this component.

Contrastingly, when utilizing an electronic packet switch ESP, which cannot operate purely within the optical domain, the fibres are coupled with transceivers T1..TN either as pluggable units similar to those found in NICs or integrated within the electronic packet switch ESP, wherein the data is managed through a standard electronic packet switch process.

It's vital to emphasize that the electronic packet switch ESP is also connected to the switch controller SC via respective control ports. This connection forms the control plane, which responds to requests from the NIC and manages the optical circuit switches OCS, as will discussed later. Depending on the traffic requirements, multiple electronic packet switches ESP may be deployed.

In summary, this diagram offers a high-level view of the smart data switch's architecture, demonstrating how it amalgamates optical and electronic components to forge a path toward more efficient and power-conscious network switching

The rectangles without reference signs in Fig. 10 do not indicate components, but rather illustrate that the fibres getting aggregated differently when routed to the transceivers T1..TN.

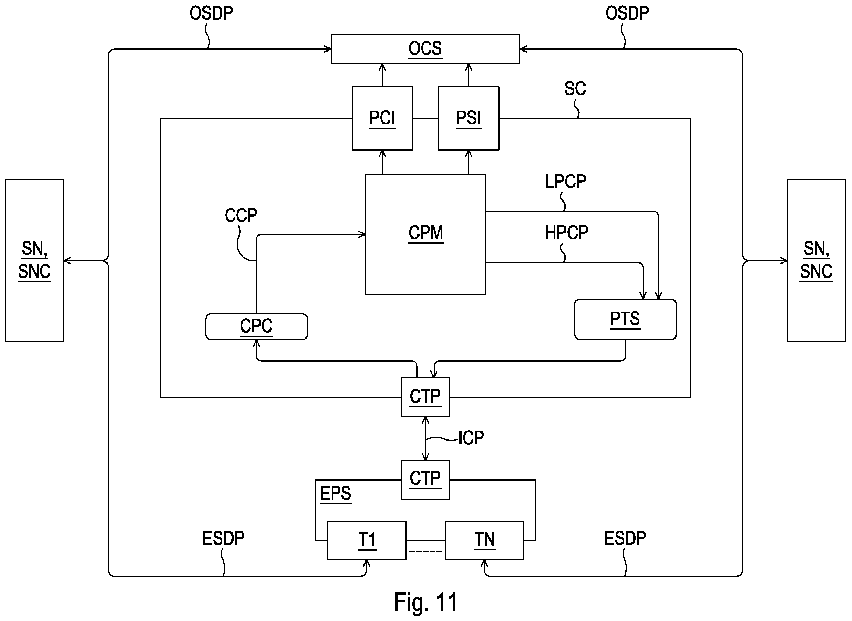

Fig. 11 shows some control aspects of the optical data network 10-1 in accordance with embodiments of the invention. To better understand the functionalities of the smart data switch Fig. 11 offers insight into the functional pathways within the switch, highlighting the interplay between data transmission and the control plane orchestrated by the switch controller SC, as discussed earlier in this specification. This perspective elevates the understanding from mere hardware connections, whether electronic or optical, to the actual routes taken by data.

Fig. 11 illustrates how data may travel from one network interface SN, SNC to the other either via an optical switch data plane OSDP that uses the (at least one) optical circuit switch OCP in this embodiment, or via an electronic switch data plane ESDP that use the (at least one) electronic packet switch EPS in this embodiment. In order to facilitate the right routing, there is also an internal control plane ICP between the electronic packet switch EPS and the switch controller SC, which terminates in the earlier discussed control ports CTP at the respective interfaces of the electronic packet switch ESP and the switch controller SC for the optical circuit switch OCS.

The data's "journey" begins at the network interface SN, SNC or Smart NIC, as referred to earlier. For data to travel via the circuit switch OCS, here being an optical link, the Smart NIC formulates a capacity request encompassing details like the data volume and destination. This request traverses the (electronic) packet switch EPS to reach the switch controller SC, which processes the request and responds by scheduling a specific time slot for the transmission. At the designated moment, the switch controller SC configures one or more optical circuit switches (when available) to enable the transfer.

Key components of this embodiment of the optical data network according to the invention includes:
1) The earlier discussed electronic packet switch EPS, which serves as the network's electronic "heart" while interfacing with several transceivers T1..TN, as illustrated, to facilitate the routing and processing of electronic data packets.
2) The control port CTP on the electronic packet switch EPS, which port supports various connector types, including SFP, QSFP, and RJ45 Ethernet. It's the vital conduit to the switch controller SC, enabling command and control functions.
3) The earlier discussed transceivers T1..TN, on the electronic packet switch EPS, which are responsible for converting optical signals back and forth into electronic signals, such as the 400G DR4. These transceivers effectively complete the optical or optical data plane via the electronic packet switch.
4) A control packet classifier CPC, which receives incoming control packets from the electronic packet switch EPS and routes them correctly to a control plane manager CPM via a classified control plane CCP for appropriate processing.
5) The previously mentioned control plane manager CPM inside the switch controller SC, which is an important component managing control packet processing and routing, ensuring that the network's integrity and performance are maintained.
6) A priority type scheduler PTS, which manages control packets in the control port CTP, prioritizes them for transmission based on their importance, ensuring that high-priority packets are transmitted first. In order to be able to prioritize the priority type scheduler PTS receives instructions from the control plane manager CPM via a low-priority control plane LPCP and a high-priority control plane HPCP as illustrated.
7) A optical configuration interface PCI, which transmits time slot configurations to the optical circuit switch OCP, which are important for setting up paths in the switch, optimizing the routing and timing of optical signals.
8) A optical synchronisation interface PSI, which issues synchronization signals to the optical circuit switch OCP for enacting configurations from the optical configuration interface PCI in sync with each new time slot, updating operational parameters in a timely manner. NOTE: The optical configuration interface PCI and the optical synchronisation interface PSI may easily be integrated into one doing both functions.
9) The previously-discussed optical circuit switch OCS, which designed to route optical signals directly. It employs sophisticated optical technologies for high-speed, low-latency data transmission over various channels, thus boosting the network's overall efficiency and throughput.

It must be noted that the above illustrated control aspects are connected to specific embodiments only, that is embodiments where there is at least one optical circuit switch and at least one electronic packet switch. In case the circuit switch is electronic, or the packet switch is optical this will have impact on the way the controlling is done. It may basically mean that control functions are moved from the network interface to the switch or from the switch to the network interface, all dependent on what type of switches are used. The switch controller SC configures the data classifiers 25 of the network interfaces and controls the optical circuit switches OCS. The switching functions are in the network interface SN, SNC (when in the optical circuit switch OCS) or the smart switch SSW (when in the electronic packet switch EPS.

Hereinafter it will be discussed how the optical data network according to the invention may operate. Two cases are discussed, namely one where the data packet is classified by the data classifier as mouse traffic, and one where the data packet is classified by the data classifier as elephant traffic. The situation is discussed in view of the embodiment of Fig. 5.

### Case 1: Processing Heterogeneous Traffic (Mouse Traffic)

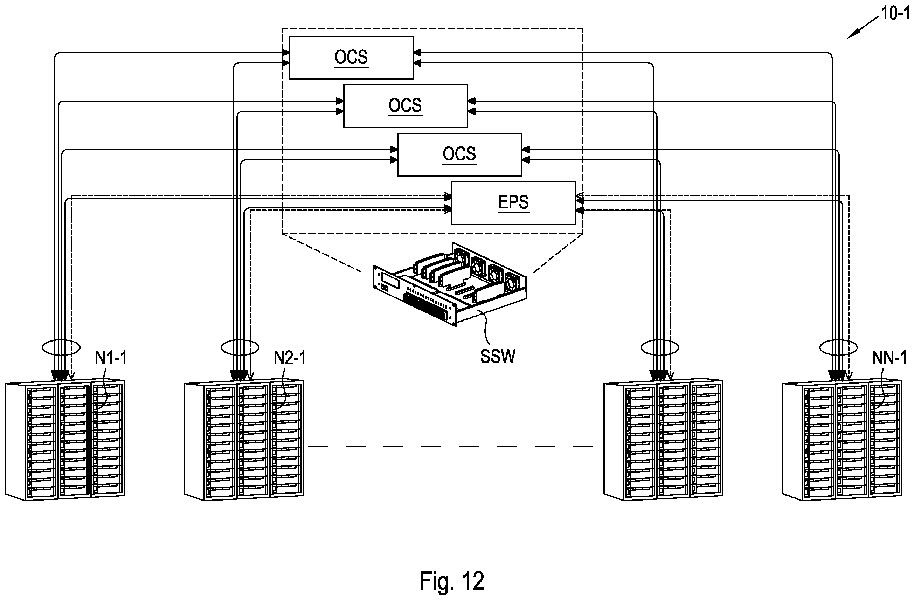

This is the case in which a data packet has been classified as mouse traffic, in this case as described before the data packet will pass through the electronic packet switch. Fig. 12 illustrates communication aspects of the optical data network 10-1 when data packets are being sent to the packet switch EPS.

The following steps outline the process from when a data packet enters the system to when it is ultimately forwarded:
1. Data packet Entry: The data packet enters the Smart NIC of the source node N1-1 through the PCIe interface or an equivalent interface.
2. Initial Classification: The data packet in the Smart NIC is classified to pass through the electronic packet switch EPS as a first traffic class D1 (Fig. 9).
3. Transmission via the electronic packet switch EPS: After classification, the data packet is sent through the electronic packet switch line to the transceiver of the Smart NIC.
4. Optical Transmission: The transceiver in the Smart NIC then sends the data packet via the optical link to the smart data switch SSW.
5. Optical to Electronic Conversion at smart data switch SSW: Upon reaching the smart data switch SSW, another transceiver in the electronic packet switch EPS converts the data packet back from optical to electronic form.
6. Forwarding to Destination Port: The electronic packet switch then forwards the data packet to the transceiver in the electronic packet switch EPS connected to the destination port and is converted back to optical form.
7. Optical Transmission: The transceiver in the electronic packet switch EPS sends the data packet via the optical link to the Smart NIC of the destination node NN-1.
8. Reception at Destination Smart NIC: The Smart NIC of the destination receives the data packet.
9. Final Classification and Forwarding: The data packet is classified as a data packet and is subsequently forwarded through the PCIe interface of the Smart NIC of the destination node NN-1.

### Case 2: Processing Large Data Streams (Elephant Traffic)

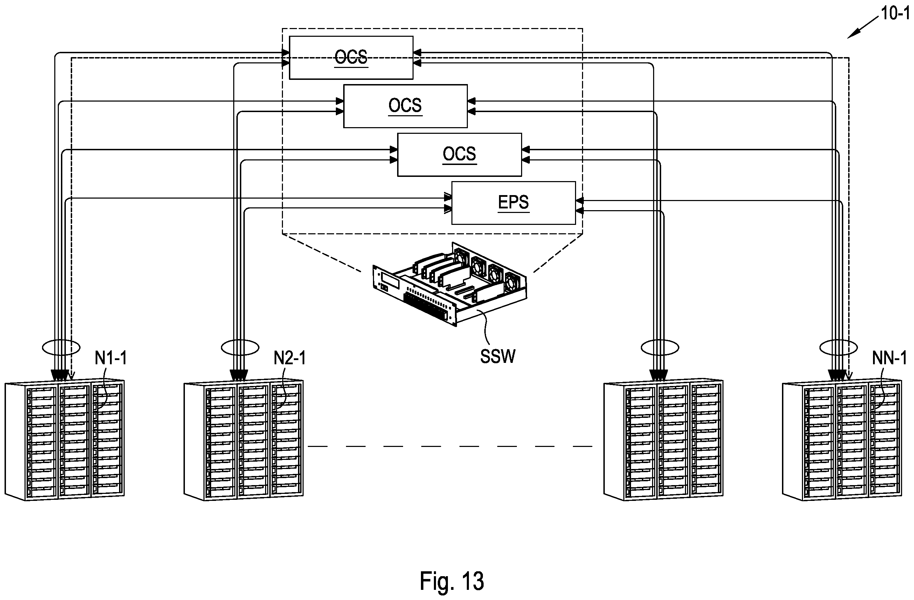

This scenario involves a data packet classified as elephant traffic, indicating it is part of a larger data stream or directed towards a destination where an optical link via de optical circuit switch OCS is already established or has been requested. Fig. 13 illustrates communication aspects of the optical data network 10-1 when data packets are being sent to one of the optical circuit switches OCS.

The following steps outline the process from when a data packet enters the system to when it is ultimately forwarded:
1. Data packet Entry: The data packet enters the system through the Smart NIC of the source node N1-1 via the PCIe interface or an equivalent interface.
2. Initial Classification: The data packet is classified in the Smart NIC as a second traffic class D2 (Fig. 9) for routing through a direct optical link.
3. Queueing and Buffering: The data packet is placed into the appropriate destination buffer and priority class in the Smart NIC. Details on the buffering process are discussed in the section about the Smart NIC.
4. Control Plane Operation: The control plane (in the Smart NIC) as discussed in view of Fig. 11 exchanges information and requests capacity based on usage and the data packet's class. The smart data switch SSW responds by assigning an optical link with a specific timestamp and duration.
5. Transmission to Transceiver: The data packet is forwarded to the transceiver of the Smart NIC at the corresponding channel when the channel control semaphore signals the opening of the optical link through the respective optical circuit switch OCS.
6. Reception at Destination Smart NIC: The Smart NIC of the destination node NN-1 receives the data packet.
7. Final Classification and Forwarding: The data packet is classified as a data packet and subsequently forwarded through the PCIe interface of the destination NIC.

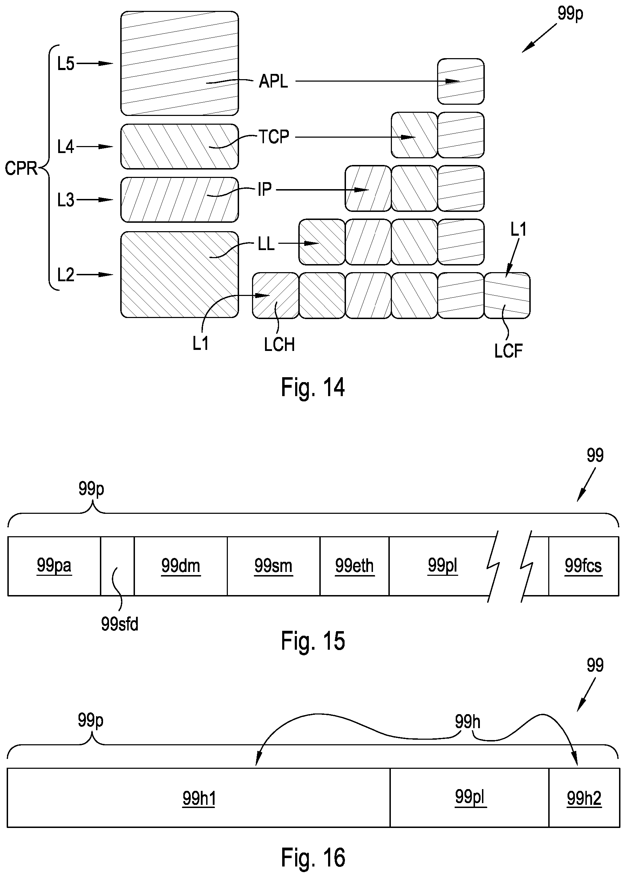

Fig. 14 illustrates how data packets can have multiple layers each having different communication protocols. The figure illustrates the different layers L1, L2, L3, L4 with different types of patterning. A data packet 99p may comprise multiple communication protocols CPR as illustrated in Fig. 14, each communication protocol being in a different layer L1, L2, L3, L4. For example, the first and lowest layer L1 may be an error correcting layer having a header LCH and a footer LCF, which may feature error correction. Then, the second layer L2 may comprise a first communication protocol, for example for establishing a link layer LL. Such communication protocol could be Ethernet MAC or Ethernet PHY, for example. Then the third layer L3 may comprise a second communication protocol, for example an internet protocol IP. The fourth layer L4 may comprise a third communication protocol, for example a transmission control protocol TCP. The fifth layer L5 may comprise a fourth communication protocol, for example an application protocol, which typically comprises the data (i.e. a message) for the application. Fig. 14 clearly illustrates how the different communication protocols CPR are nested when aggregated in a data packet 99p. When the data packet is analysed, first the first layer L1 is identified, then the second layer L2, then the third layer L3, then the fourth layer L4, and finally the fifth layer L5.

Fig. 15 illustrates how an ethernet data packet 99p is typically built up. Fig. 16 illustrates more generally how a data packet 99p is typically built up. The ethernet data packet 99p comprises a header 99h, which in this example comprises of two parts 99h1, 99h2. Fig. 15 shows how the first part 99h1 of the header 99h comprise fields for a preamble 99pa, a start frame delimiter 99sfd, a destination MAC address 99dm, a source MAC address 99sm, an Ethernet type 99eth, a payload 99pl, and a frame check sequence 99fcs. Figs. 15 and 16 only serve to illustrate the structure of data packets in general. It must be noted that there are many different types of data packets, but they all follow the structure of Fig. 16 to a great extent. It must also be noted that the payload field 99pl may comprise a further header and a further payload, wherein the further payload may comprise yet a further header and yet a further payload, etc. This all depends on how many communication protocols are nested in the data packet 99p.

### More detailed discussion on the predefined classification scheme

In the earlier sections, the terms "elephant traffic" and "mouse traffic" were introduced to categorize network flows based on the type classifier at the smart NIC. This terminology intentionally deviates from the traditional "elephant flow" and "mice flow" used in network research literature. The decision to use different terms highlights a subtle variation in definitions, though it remains closely tied to the established conceptual framework.

Within the global network community, mice flows are typically identified by their small size and short duration. On the other hand, elephant flows are characterized by their significant volume and extended duration. Research shows that mice flows make up more than 90% of total flows in data centre networks but contribute less than 10% of the total data transmitted. A typical mice flow involves less than 10KB, contained within just a few data packets. In contrast, elephant flows, which represent only about 10% of flows, carry 90% of the data transmitted across the network.

The inventors decided to refine this flow classification by including criteria beyond the standard metrics of volume and duration.

Key changes in the classification approach include:
- Mice flows that consist of predictable packets fitting efficiently into a specific TDMA time slot may be classified as elephant traffic to utilize the high-speed path.
- Mice flows with minimal latency requirements might be reclassified as elephant traffic, helping to alleviate congestion on the slower path.
- When multiple mice flows converge towards a single destination, they can be aggregated and treated as elephant traffic, improving network resource utilization.
- Elephant flows, when affected by latency issues, may be temporarily classified as mouse traffic. This adjustment helps speed up the initial phase and reduce start-up delays, boosting network performance.
- In situations where the high-speed data path is congested, elephant flows might be downgraded to mouse traffic to ensure fair bandwidth distribution and maintain service quality.

The expanded traffic classification criteria enable a more adaptable and proactive network management strategy. This method goes beyond traditional size and duration considerations to include factors like packet sequence predictability, latency constraints, and the potential for flow aggregation. As a result, the optical data network of the current invention is designed to enhance network efficiency and performance by adjusting to various conditions and demands.

These criteria form the basis for an efficient data classifier within the smart NIC. While no solution is perfect, the closer the data classifier can accurately identify the described behaviours, the more effectively it will balance the network, utilizing both the advantages of the electronic packet switch EPS and the optical circuit switch OCS. For instance, in a TCP data stream, a well-designed classifier should initially utilize the packet switch EPS for a fast ramp-up phase, then switch to an optical circuit switch OCS to offload traffic and prevent congestion at the electronic packet switch after reaching a set threshold.

From the above detailed description of the figures, it is clear that the inventive innovation lies in employing Smart NICs to facilitate the seamless use of a hybrid smart switch, which combines circuit switches OCS (preferably optical these days, but not necessarily so in the future) and packet switches EPS (preferably electronic these days, but not necessarily so in the future). The invention addresses the response time challenges typically associated with solutions like the known Helios solution as discuss in this specification.

The particular embodiments disclosed above are illustrative only, as the invention may be modified and practiced in different but equivalent manners apparent to those skilled in the art having the benefit of the teachings herein. For example, many of the circuit types mentioned have thousands of implementations for carrying out the same function. The invention covers all these variants as long as they are covered by the independent claim. No limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

One of the variations concerns the type of packet switch and the type of circuit switch. The detailed description of the figures focuses on electronic packet switches and optical circuit switches, which complies with the most common state of the art at the moment of filing this specification. However, in the future packet switches may be optical or circuit switches may be electronic. The invention also covers all such variations.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise", and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage. In the device claims enumerating several means, several of these means may be embodied by one and the same item of hardware.

## Claims

1. An optical data network (10-1) for connecting a plurality of data network nodes (N1-1, N2-1, N3-1, N4-1), the optical data network (10-1) comprising:
- the plurality of data network nodes (N1-1, N2-1, N3-1, N4-1) configured for communicating data (99) with each other (N1-1, N2-1, N3-1, N4-1), wherein the data (99) is communicated using a communication protocol (CPR), the data (99) comprising data packets (99p) in accordance with the communication protocol (CPR), wherein each data network node (N1-1, N2-1, N3-1, N4-1) is provided with a network interface (Nl); and
- a data connection network (100-1) comprising at least one data switch (SW) and a plurality of optical connections (50) connecting the at least one data switch (SW) with the network interfaces (NI) of the plurality of data network nodes (N1-1, N2-1, N3-1, N4-1) thereby forming the data connection network (100-1) for allowing establishment of data links (DL1, DL2) between pairs of said plurality of data network nodes (N1-1, N2-1, N3-1, N4-1),
**characterized in that** at least one of the at least one data switch (SW) is a smart data switch (SSW) comprising at least one packet switch (PS, EPS) and at least one circuit switch (CS, OCS),
and **in that** at least the respective network interfaces (NI) connected with each smart data switch (SSW) are respective smart network interfaces (SN, SNC), each smart network interface (SN, SNC) comprising a data classifier (25) configured for classifying the data packets (99p) into at least two traffic classes including first traffic class (D1) and a second traffic class (D2) in accordance with a classification scheme, wherein the first traffic class (D1) is destined to be sent to the packet switch (PS, EPS) and the second traffic class (D2) is destined to be sent to the circuit switch (CS. OCS),
and **in that** the smart data switch (SSW) and the network interfaces (SN, SNC) are configured to route the data packets (99p) of the first traffic class (D1) to the packet switch (PS, EPS) and to route the data packets (99p) of the second traffic class (D2) to the circuit switch (CS, OCS).

2. The optical data network (10-1) according to claim 1, wherein the classification scheme is based on a header (99h, 99h1, 99h2) of the data packets (99p).

3. The optical data network (10-1) according to claim 1 or 2, wherein the classification scheme is based on further parts (99pl, 99pa, 99sfd, 99dm, 99sm, 99eth, 99fcs) of the data packets (99p), such as a payload (99pl) of the data packet (99p).

4. The optical data network (10-1) according to any one of the preceding claims, wherein the classification scheme is based on at least one of the following classification criteria: a destination field (99dm) of the data packets (99p), a source field (99sm) of the data packets (99p), data congestion on a specific destination path, a type (LL, IP, TCP, APL) of the data packets (99p), and a quality-of-service or priority field of the data packets (99p).

5. The optical data network (10-1) according to any one of the preceding claims, wherein the smart data switch (SSW) further comprises a switch controller (SC) for controlling the at least one circuit switch (CS) and the at least one packet switch (PS).

6. The optical data network (10-1) according to any one of the preceding claims, wherein the at least one packet switch (PS) comprises an electronic packet switch (EPS).

7. The optical data network (10-1) according to any one of the preceding claims, wherein the at least one circuit switch (CS) comprises an optical circuit switch (OCS).

8. The optical data network (10-1) according to any one of the preceding claims, wherein each smart data switch (SSW) comprises at least one electronic packet switch (EPS) and three optical circuit switches (OCS).

9. The optical data network (10-1) according to claim 8, wherein each smart data switch comprises at least two electronic packet switches (EPS).

10. The smart data switch (SSW) of the optical data network (10-1) according to any one of the preceding claims.

11. The network interface (NI) of the optical data network (10-1) according to any one of claims 1 to 9.

12. The network interface (NI) according to claim 11, embodied in a network interface card (NIC).

13. A method of connecting a plurality of data network nodes (N1-1, N2-1, N3-1, N4-1) via an optical data network (10-1), the method comprising:
- providing an optical data network (10-1) comprising:
i) the plurality of data network nodes (N1-1, N2-1, N3-1, N4-1) configured for communicating data (99) with each other (N1-1, N2-1, N3-1, N4-1), wherein the data (99) is communicated using a communication protocol (CPR), the data (99) comprising data packets (99p) in accordance with the communication protocol (CPR), wherein each data network node (N1-1, N2-1, N3-1, N4-1) is provided with a network interface (Nl); and
ii) a data connection network (100-1) comprising at least one packet switch (PS, EPS) and at least one circuit switch (CS, OCS), the data connection network (100-1) further comprising a plurality of optical connections (50) connecting the at least one data switch (SW) with the network interfaces (NI) of the plurality of data network nodes (N1-1, N2-1, N3-1, N4-1) thereby forming the data connection network (100-1) for allowing establishment of data links (DL1, DL2) between pairs of said plurality of data network nodes (N1-1, N2-1, N3-1, N4-1);
- classifying the data packets (99p) into at least two traffic classes including first traffic class (D1) and a second traffic class (D2) in accordance with a classification scheme, wherein the first traffic class (D1) is destined to be sent to a packet switch (PS, EPS) and the second traffic class (D2) is destined to be sent to a circuit switch (CS, OCS), and
- routing the data packets (99p) of the first traffic class (D1) to the packet switch (PS, EPS) and to route the data packets (99p) of the second traffic class (D2) to the circuit switch (CS, OCS).

14. The method according to claim 13, wherein the classification scheme is based on a header (99h, 99h1, 99h2) of the data packets (99p).

15. The method according to claim 14, wherein the classification scheme is based on further parts (99pl, 99pa, 99sfd, 99dm, 99sm, 99eth, 99fcs) of the data packets (99p), such as a payload (99pl) of the data packet (99p).

16. The method according to any one of claims 13 to 15, wherein the classification scheme is based on at least one of the following classification criteria: a destination field (99dm) of the data packets (99p), a source field (99sm) of the data packets (99p), data congestion on a specific destination path, a type (LL, IP, TCP, APL) of the data packets (99p), and a quality-of-service or priority field of the data packets (99p).
